# EUROPÄISCHE PATENTSCHRIFT

(11) **EP 2 025 446 B1**
(45) Veröffentlichungstag und Bekanntmachung des Hinweises auf die Patenterteilung: **15.09.2010**
(21) Anmeldenummer: 08450117.0
(22) Anmeldetag: 30.07.2008
(51) Int. Cl.: B23Q 1/00, B23Q 1/48, B23Q 7/14

(54) **Vorrichtung zum Beschicken einer Bearbeitungsmaschine**
Device for loading a processing device
Dispositif de chargement d'une machine de traitement

(30) Priorität: 02.08.2007 AT 12132007
(43) Veröffentlichungstag der Anmeldung: 18.02.2009
(73) Patentinhaber: Mühlegger, Werner, Dipl.-Ing. Dr., 1230 Wien (AT)
(72) Erfinder: Mühlegger, Werner, Dipl.-Ing. Dr., 1230 Wien (AT)
(74) Vertreter: Hübscher, Helmut

(56) Entgegenhaltungen:
- EP-A- 1 375 057
- DE-U1- 7 729 830

## Beschreibung

Die Erfindung bezieht sich auf eine Vorrichtung zum Beschicken einer Bearbeitungsmaschine mit einem Drehtisch, der eine radiale Palettenführung aufweist, und mit einer der Bearbeitungsmaschine zugeordneten, in einer Übernahmestellung gegenüber dem Drehtisch ausgerichteten Spanneinrichtung für über die Palettenführung zugeförderte Werkstückpaletten.

Um die Totzeiten von Bearbeitungsmaschinen kurz zu halten, ist es bekannt (DE 84 16 193 U1), die zu bearbeitenden Werkstücke auf Paletten genau zu positionieren, sodass nicht die Werkstücke selbst, sondern lediglich die Werkstückpaletten mit Hilfe einer Spanneinrichtung in der Bearbeitungsmaschine festgehalten werden müssen, was wegen der untereinander gleichen Spannbedingungen der Werkstückpaletten einfach durchgeführt werden kann. Zur Beschickung der Bearbeitungsmaschine mit auf den Werkstückpaletten aufgespannten Werkstücken ist zwischen der Bearbeitungsmaschine und einem Palettenförderer ein Drehtisch mit einer zur Drehachse radialen Palettenführung vorgesehen, auf die die Werkstückpaletten vom Palettenförderer aufgeschoben und in die anschließende Spanneinrichtung der Bearbeitungsmaschine ausgeschoben werden können, wenn der Drehtisch in eine entsprechende Übergabestellung gedreht wird. In ähnlicher Weise können mit Hilfe des Drehtisches bearbeitete Werkstücke mit ihren Paletten aus der Bearbeitungsmaschine entnommen und dem Palettenförderer übergeben werden. Aufgrund der Drehverstellung des Drehtisches zwischen einer Übergabestellung und einer dazu quer verlaufenden Ruhestellung kann der Palettenförderer in platzsparender Weise nahe an den Drehtisch herangeführt werden.

Darüber hinaus ist es bei Bearbeitungsmaschinen mit einer Schutzeinhausung bekannt (DE 296 23 055 U1), in die Wand der Schutzeinhausung einen eine Wandöffnung verschließenden Drehtisch vorzusehen, der bezüglich der Einhausungswand auf gegenüberliegenden Seiten je eine Spanneinrichtung für Werkstücke trägt und in Drehschritten von 180° gedreht werden kann. Die Anordnung ist dabei so getroffen, dass das jeweils in der Spanneinrichtung auf der Innenseite der Schutzeinhausung gehaltene Werkstück bearbeitet werden kann, während die Spanneinrichtung auf der Außenseite der Schutzeinhausung be- oder entladen wird. Wegen der bearbeitungsgerechten Aufspannung der Werkstücke in den Spanneinrichtungen des Drehtisches muss dieser allerdings eine entsprechend aufwändige, steife Konstruktion aufweisen. Außerdem sind die Bearbeitungsmöglichkeiten der Werkstücke beschränkt, weil das Werkstück nicht über die Spanneinrichtung unterschiedlichen Bearbeitungsstationen der Bearbeitungsmaschine zugeführt werden kann.

Zum Spannen von Paletten zur Aufnahme von Werkstücken ist es schließlich bekannt (DE 101 23 270 A1), die Spanneinrichtung mit Verriegelungsaufnahmen für an den Paletten vorgesehene Riegelansätze zu versehen, die in den Verriegelungsaufnahmen mit Hilfe von Verriegelungseinheiten verriegelt werden. Diese Verriegelungseinheiten umfassen Riegelkörper, die mit Hilfe des durch Schließfedern beaufschlagbaren Verriegelungskolbens eines gegensinnig zu den Schließfedern beaufschlagbaren Zylinders radial in eine Ringnut der Riegelansätze gedrückt werden und dadurch die Riegelansätze in den Verriegelungsaufnahmen axial festhalten. Um ein schonendes Ausfahren der entriegelten Riegelansätze aus den Verriegelungsaufnahmen zu erreichen, ist der Verriegelungskolben als Ringkolben ausgebildet, der wiederum einen Hubzylinder bildet und einen Hubkolben aufnimmt. Dieser Hubkolben tritt bei seiner Beaufschlagung durch die Verriegelungsaufnahme, wobei die Werkstückpalette über die Riegelansätze von der Spanneinrichtung abgehoben wird. Bekannte Spanneinrichtungen dieser Art haben jedoch keinen Einfluss auf die Beschickung einer Bearbeitungsmaschine mit auf Werkstückpaletten aufgespannten Werkstücken.

Um die Arbeitszeit einer Werkzeugmaschine voll ausnützen zu können, ist es schließlich bekannt (DE 77 29 830 U1), um einen der Werkzeugmaschine vorgelagerten Drehtisch mehrere Palettentische anzuordnen, sodass auf den einzelnen Palettentischen während der Arbeitszeit der Werkzeugmaschine Werkstücke auf Werkstückpaletten aufgespannt werden können, die dann mit Hilfe des Drehtisches der Werkzeugmaschine zugeführt werden. Zu diesem Zweck ist der Drehtisch mit zwei einander diametral gegenüberliegenden Schienenpaaren versehen, die in den einzelnen Übergabestellungen des Drehtisches ein Verfahren der Werkstückpaletten zwischen dem Drehtisch und den jeweils mit einem Schienenpaar versehenen Palettentischen bzw. der Werkzeugmaschine mit Hilfe von dem Drehtisch zugeordneten Stelltrieben erlauben.

Der Erfindung liegt somit die Aufgabe zugrunde, eine Vorrichtung der eingangs geschilderten Art zum Beschicken einer Bearbeitungsmaschine so auszugestalten, dass vorteilhafte Bedingungen einerseits zum Aufspannen der Werkstücke auf den Werkstückpaletten und anderseits zur Übergabe der beladenen Werkstückpaletten an die der Bearbeitungsmaschine zugehörige Spanneinrichtung sichergestellt werden können, ohne eine gegebenenfalls vorgesehene Werkstückverlagerung über die Spanneinrichtung zu behindern.

Die Erfindung löst die gestellte Aufgabe dadurch, dass die Palettenführung zwei einander bezüglich des Drehtisches diametral gegenüberliegende, radial verfahrbare Palettenaufnahmen umfasst und dass zwischen dem Drehtisch und der Spanneinrichtung eine Kupplungseinrichtung für Versorgungsleitungen zur Beaufschlagung der Spanneinrichtung in der Übernahmestellung vorgesehen ist, wobei die der Spanneinrichtung gegenüberliegenden Kupplungsteile mit einem Stelltrieb zum Herstellen der jeweiligen Kupplungsverbindung versehen sind.

Das Vorsehen von zwei Palettenaufnahmen auf einander diametral gegenüberliegenden Seiten des Drehtisches stellt eine vorteilhafte Voraussetzung für einen reibungslosen Arbeitsablauf einerseits für das Aufspannen der zu bearbeitenden Werkstücke auf eine Werkstückpalette und anderseits für das Be- und Entladen der Bearbeitungsmaschine dar, weil die Zugangsseite des Drehtisches für das Aufspannen der Werkstücke genützt werden kann, während die gegenüberliegende Palettenaufnahme als Zwischenspeicher für Werkstückpaletten mit zu bearbeitenden oder bereits bearbeiteten Werkstücken dient. Das Be- und Entladen der Bearbeitungsmaschine bedingt eine entsprechende Betätigung der Spanneinrichtung für die Werkstückpaletten, was insbesondere dann Schwierigkeiten macht, wenn die Spanneinrichtung im Zuge der Werkstückbearbeitung verlagert wird. Um diese Schwierigkeiten, die auf den Anschluss entsprechender Versorgungsleitungen zur Beaufschlagung der verlagerbaren Spanneinrichtung zurückzuführen sind, zu vermeiden, wird zwischen dem Drehtisch und der Spanneinrichtung eine Kupplungseinrichtung für Versorgungsleitungen zur Beaufschlagung der Spanneinrichtung in der Übernahmestellung vorgesehen, sodass die Spanneinrichtung lediglich in der Übernahmestellung zu ihrer Betätigung an die Versorgungsleitungen angeschlossen wird. Eine Betätigung der Spanneinrichtung während der Werkstückbearbeitung ist ja nicht erforderlich, wenn für eine selbsthaltende Verriegelung der Werkstückpaletten in der Spanneinrichtung gesorgt wird. Dies bedeutet, dass zur Übergabe einer Werkstückpalette an die Spanneinrichtung in der Übernahmestellung zunächst der Stelltrieb zum Herstellen der jeweiligen Kupplungsverbindung betätigt werden muss, bevor die Werkstückpalette in der Spanneinrichtung bearbeitungsgerecht verriegelt werden kann. Dies gilt selbstverständlich nicht nur für das Beladen, sondern auch für das Entladen der Bearbeitungsmaschine.

Die einander diametral gegenüberliegenden Palettenaufnahmen des Drehtisches können in aufwändiger Weise auf gesondert verfahrbaren Schlitten angeordnet werden. Eine voneinander unabhängige Verlagerung der Palettenaufnahmen ist jedoch in vielen Fällen nicht erforderlich, weil aus Sicherheitsgründen der Zugang zum Drehtisch während der Be- und Entladung der Bearbeitungsmaschine gesperrt wird. Es ergeben sich daher erheblich einfachere Konstruktionsverhältnisse, wenn die Palettenaufnahmen auf einem gemeinsamen, radial verfahrbaren Schlitten vorgesehen werden, ohne dass sich hinsichtlich des Arbeitsablaufes ins Gewicht fallende Einschränkungen ergeben.

Wie bereits ausgeführt wurde, ist eine selbsthaltende Verriegelung der Werkstückpaletten in der Spanneinrichtung vorzusehen, damit die Spanneinrichtung für ihre Verlagerung von den jeweiligen Versorgungsleitungen zu ihrer Beaufschlagung getrennt werden kann. Diese Verriegelung kann durch unterschiedliche konstruktive Maßnahmen erreicht werden. Eine einfache Möglichkeit für eine selbsthaltende Verriegelung ergibt sich, wenn die Spanneinrichtung gegen die Kraft von Schließfedern lösbare Verriegelungseinheiten zur Verriegelung von in Verriegelungsaufnahmen eingreifenden Riegelansätze der Werkstückpaletten aufweisen, weil in diesem Fall die Schließfedern die Verriegelungsstellung der Verriegelungseinheiten sicherstellen, die über eine Beaufschlagung beispielsweise eines gegen die Schließfedern wirksamen Zylinders geöffnet werden können, was einen entsprechenden Anschluss der Spanneinrichtung an Versorgungsleitungen für ein Druckmittel voraussetzt. Bei solchen Verriegelungseinheiten ist es bekannt, in den Verriegelungsaufnahmen Hubzylinder einzusetzen, über die die Riegelansätze der Werkstückpaletten schonend aus den Verriegelungsaufnahmen angehoben werden können. Bei einer entsprechenden Auslegung dieser Hubzylinder können die Werkstückpaletten auch in der Übergabestellung von den Palettenaufnahmen des Drehtisches angehoben werden, um nach einem Zurückfahren der jeweiligen Palettenaufnahmen die Werkstückpalette auf die Spanneinrichtung so abzusetzen, dass die Verriegelungsansätze in die Verriegelungsaufnahmen eingreifen. Beim Entladen der Bearbeitungsmaschine können dann die Werkstückpaletten aus der entriegelten Spanneinrichtung mit Hilfe der Hubzylinder wieder soweit angehoben werden, dass die Palettenaufnahme des Drehtisches unter die Werkstückpalette verfahren und anschließend auf die Palettenaufnahme abgesetzt werden kann, sodass sich hierfür gesonderte Hubeinrichtungen erübrigen.

In der Zeichnung ist der Erfindungsgegenstand beispielsweise dargestellt. Es zeigen
- Fig. 1: eine erfindungsgemäße Vorrichtung zum Beschicken einer Bearbei- tungsmaschine in einer vereinfachten Seitenansicht,

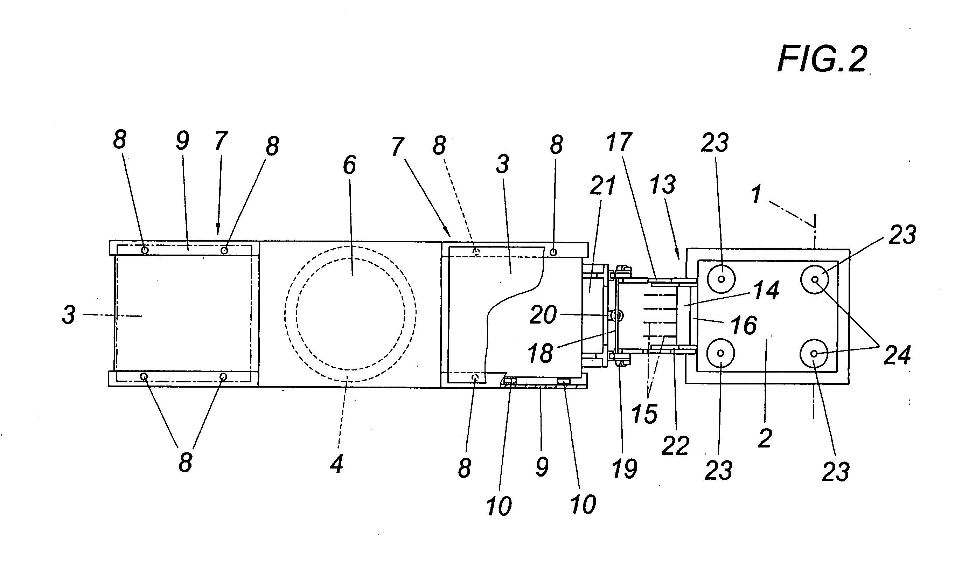

- Fig. 2: diese Vorrichtung in einer schematischen Draufsicht,
- Fig. 3: eine der Fig. 1 entsprechende Darstellung der in einer Übernahmestel- lung befindlichen Vorrichtung und die
- Fig. 4 und Fig. 5: eine Verriegelungseinheit der Spanneinrichtung in einem schematischen Axialschnitt in zwei Arbeitsstellungen jeweils in einem größeren Maßstab.

Die dargestellte Vorrichtung zum Beschicken einer strichpunktiert angedeuteten Bearbeitungsmaschine 1, die mit einer Spanneinrichtung 2 für Werkstückpaletten 3 zum bearbeitungsgerechten Aufspannen der zu bearbeitenden Werkstücke versehen ist, umfasst einen Drehtisch 4 mit einer radialen Führung 5 für einen Schlitten 6, der auf einander diametral gegenüberliegenden Seiten des Drehtisches 4 zwei Palettenaufnahmen 7 mit Anschlägen 8 für eine vorgegebene Solllage der Werkstückpaletten 3 aufweist. Der Schlitten 6 ist mit zwei seitlichen Führungsschienen 9 versehen, die auf Rollen 10 des Drehtisches 4 verschiebbar gelagert sind. Zum Antrieb des Schlittens 6 dient beispielsweise ein umlaufender Kettentrieb 11, dessen Antriebsmotor mit 12 bezeichnet ist.

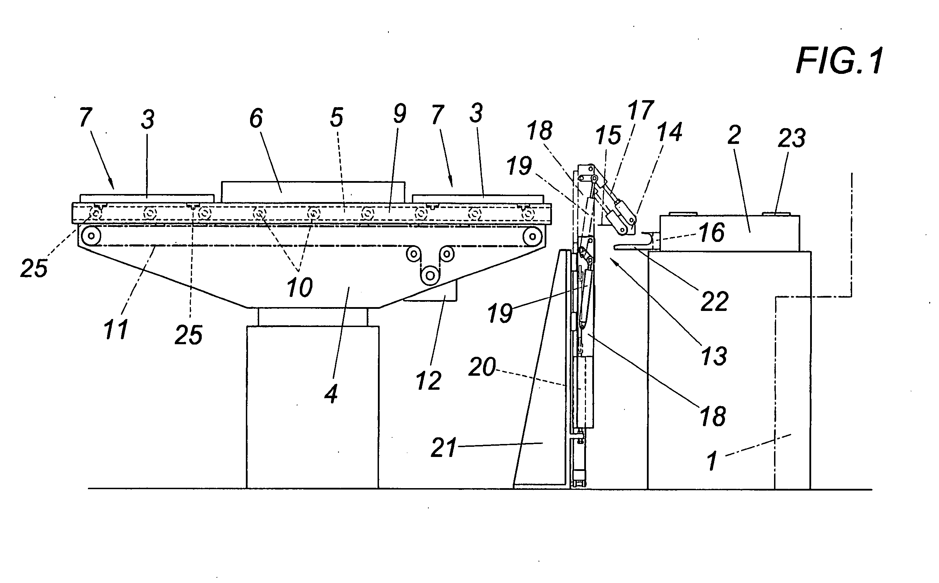

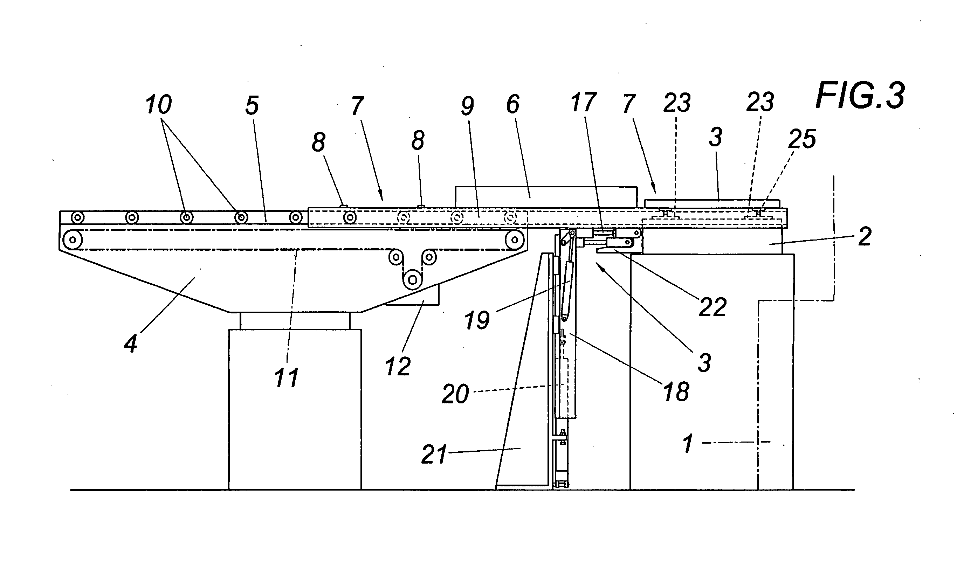

Zwischen dem Drehtisch 4 und der Spanneinrichtung 2 ist eine Kupplungseinrichtung 13 für in einem Kupplungsblock 14 zusammengefasste, strichpunktiert angedeutete Versorgungsleitungen 15 zur Beaufschlagung der Spanneinrichtung 2 mit einem Druckmittel angeordnet, wobei der Kupplungsblock 14 den einen Teil und die ebenfalls in einem Anschlussblock 16 zusammengefassten Anschlussleitungen der Spanneinrichtung 2 den anderen Teil der Steckkupplungen bilden. Der Kupplungsblock 14 der Kupplungseinrichtung 13 ist vorzugsweise in einer Parallelogrammführung 17 gehalten, die in einem Hubschlitten 18 gelagert ist und mit Hilfe eines Schwenkzylinders 19 aus einer z. B. nach unten eingeklappten Ruhestellung in eine ausgeklappte Arbeitsstellung verschwenkt werden kann. Der über einen Hubzylinder 20 der Höhe nach verschiebbar in einem Gestell 21 gelagerte Hubschlitten 18 wird zum Kuppeln der Kupplungseinrichtung 13 aus der in der Fig. 1 in vollen Linien dargestellten Grundstellung in die strichpunktiert eingezeichnete Hubstellung ausgefahren, um die Parallelogrammführung 17 in den Bereich einer Kupplungsführung 22 ausschwenken zu können. Mit dem Absenken des Hubschlittens 18 wird der Kupplungsblock 14 entlang der Kupplungsführung 22 gegen den Anschlussblock 16 vorgeschoben, bis der Kupplungseingriff über entsprechende Steckverbindungen hergestellt wird, wie dies der Fig. 3 entnommen werden kann.

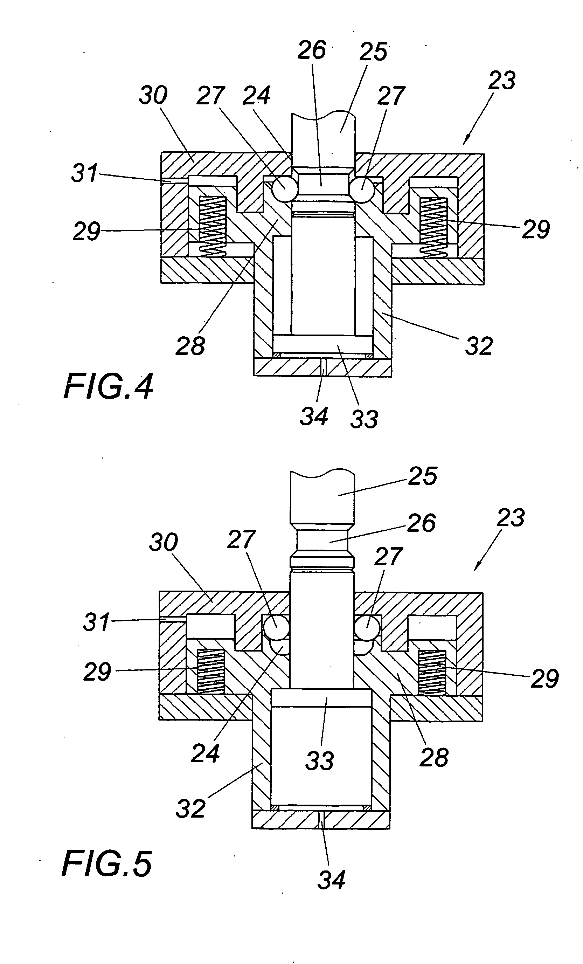

Nach einem solchen Anschluss der Spanneinrichtung 2 an entsprechende Versorgungsleitungen 15 zu ihrer Betätigung kann der Schlitten 6 in einer vorgegebenen Übernahmestellung des Drehtisches gegen die Spanneinrichtung 2 mit Hilfe des Kettentriebes 11 vorgeschoben werden, um die in der der Spanneinrichtung 2 zugekehrten Palettenaufnahme 7 abgelegte, mit einem aufgespannten Werkstück versehene Werkstückpalette 3 an die Spanneinrichtung 2 abgeben zu können. Die Spanneinrichtung 2 besitzt zur Verriegelung der zu übernehmenden Werkstückpalette 3 Verriegelungseinheiten 23, wie sie in den Fig. 4 und 5 näher dargestellt sind. Diese Verriegelungseinheiten 23 bilden Verriegelungsaufnahmen 24 für Riegelanden Verriegelungsaufnahmen 24 für Riegelansätze 25 der Werkstückpaletten 3. Die Ansätze 25 der Werkstückpaletten 3 sind mit einer Verriegelungsnut 26 versehen, in die Riegelkörper 27 in Form von Kugeln eingreifen, die mit Hilfe eines Verriegelungskolbens 28 in der Verriegelungsstellung nach der Fig. 4 gehalten werden, und zwar mit Hilfe von Schließfedern 29. Das einen entsprechenden Zylinder für den Verriegelungskolben 28 bildende Gehäuse 30 der Verriegelungseinheiten 23 weist einen Druckmittelanschluss 31 auf, um den Verriegelungskolben 28 aus der Schließstellung nach der Fig. 4 gegen die Kraft der Schließfedern 29 in die Entriegelungsstellung nach der Fig. 5 zu verlagern. In dieser Entriegelungsstellung gibt der Verriegelungskolben 28 die Verriegelungskörper 27 frei, die demnach beim Ausziehen der Riegelansätze 25 aus den Verriegelungsaufnahmen 24 aus der Verriegelungsnut 26 radial herausgedrückt werden und die Riegelansätze 25 freigeben. Damit das Ausheben der Riegelansätze 25 der Werkstückpaletten 3 aus den Verriegelungsaufnahmen 24 der Verriegelungseinheiten 23 vorteilhaft vorgenommen werden kann, bildet der ringförmige Verriegelungskolben 28 einen Hubzylinder 32 für einen Hubkolben 33, mit dessen Hilfe die Riegelansätze 25 der Werkstückpaletten 3 aus der Verriegelungsaufnahme 24 ausgehoben werden können, wenn der Hubzylinder 32 über eine Versorgungsleitung 34 entsprechend beaufschlagt wird, wie dies in der Fig. 5 dargestellt ist.

Aufgrund dieser Ausbildung der Verriegelungseinheiten 23 können die Werkstückpaletten 3 aus den Palettenaufnahmen 7 des Schlittens 6 über die Riegelansätze 25 angehoben werden, um den Schlitten 6 unter der Werkstückpalette 3 zurückzuziehen, sodass die Werkstückpalette 3 mit dem aufgespannten Werkstück auf die Verriegelungseinheiten 23 der Spanneinrichtung 2 abgesenkt und innerhalb der Verriegelungseinheiten 23 verriegelt werden kann, indem nach dem Absenken des Hubkolbens 33 der Beaufschlagungsdruck des Zylinders für den Verriegelungskolben 28 abgebaut wird, was eine Verlagerung des Verriegelungskolbens 28 durch die Schließfedern 29 und damit eine Verriegelung der Riegelansätze 25 der Werkstückpaletten 3 durch die Riegelkörper 27 zur Folge hat. Die Kupplungseinrichtung 13 kann dann geöffnet und die Spanneinrichtung 2 von ihren Versorgungsleitungen 15 getrennt werden, um die Spanneinrichtung 2 gegebenenfalls im Zuge der Werkstückbearbeitung verlagern zu können, ohne auf eine Mitführung von Versorgungsleitungen Rücksicht nehmen zu müssen. Die Entladung der Bearbeitungsmaschine erfolgt in analoger Weise. Die Palettenaufnahme 7 auf der Seite der Spanneinrichtung 2 stellt einen Zwischenspeicher für die zu bearbeitenden bzw. die bereits bearbeiteten Werkstücke dar, während die gegenüberliegende Palettenaufnahme 7 des Drehtisches 4 insbesondere zum Aufspannen der zu bearbeitenden Werkstücke auf eine Werkstückpalette 3 genützt werden kann.

Die Erfindung ist selbstverständlich nicht auf das dargestellte Ausführungsbeispiel beschränkt. So könnte die Übergabestellung des Drehtisches 4 durch eine von 180° abweichende Drehung des Drehtisches 4 aus seiner Ausgangsstellung erreicht werden. Der Stelltrieb zur Betätigung der Kupplungseinrichtung 13 könnte auch durch den Schlitten 6 selbst gebildet werden, der die Kupplungseinrichtung 13 über einen Federspeicher beaufschlagt. Es kommt ja nicht auf die Art des Stelltriebes an, sondern darauf, dass die Kupplungseinrichtung 13 über einen geeigneten Stelltrieb betätigt wird.

## Patentansprüche

1. Vorrichtung zum Beschicken einer Bearbeitungsmaschine(1) mit einem Drehtisch (4), der eine radiale Palettenführung aufweist, und mit einer der Bearbeitungsmaschine (1) zugeordneten, in einer Übernahmestellung gegenüber dem Drehtisch (4) ausgerichteten Spanneinrichtung (2) für über die Palettenführung zugeförderte Werkstückpaletten (3), **dadurch gekennzeichnet, dass** die Palettenführung zwei einander bezüglich des Drehtisches (4) diametral gegenüberliegende, radial verfahrbare Palettenaufnahmen (7) umfasst und dass zwischen dem Drehtisch (4) und der Spanneinrichtung (2) eine Kupplungseinrichtung (13) für Versorgungsleitungen (15) zur Beaufschlagung der Spanneinrichtung (2) in der Übernahmestellung vorgesehen ist, wobei die der Spanneinrichtung (2) gegenüberliegenden Kupplungsteile mit einem Stelltrieb zum Herstellen der jeweiligen Kupplungsverbindung versehen sind.

2. Vorrichtung nach Anspruch 1, **dadurch gekennzeichnet, dass** die Palettenaufnahmen (7) auf einem gemeinsamen, radial verfahrbaren Schlitten (6) vorgesehen sind.

3. Vorrichtung nach Anspruch 1 oder 2, **dadurch gekennzeichnet, dass** die Spanneinrichtung (2) gegen die Kraft von Schließfedern (29) lösbare Verriegelungseinheiten (23) zur Verriegelung von in Verriegelungsaufnahmen (24) eingreifende Riegelansätze (25) der Werkstückpaletten (3) aufweist.

4. Vorrichtung nach Anspruch 3, **dadurch gekennzeichnet, dass** die Spanneinrichtung (2) in den Verriegelungsaufnahmen (24) eingesetzte Hubzylinder (32) zum Anheben der Werkstückpaletten (3) von der Palettenaufnahme (7) des Drehtisches (4) umfasst.

## Claims

1. Device for loading a processing device (1) having a turntable (4) which has a radial pallet guide, and having a clamping device (2), which is allocated to the processing device (1) and aligned in a transfer position with respect to the turntable (4), for work piece pallets (3) supplied via the pallet guide, **characterised in that** the pallet guide comprises two radially moveable pallet receivers (7) which lie diametrically opposite each other with respect to the turntable (4), and that between the turntable (4) and the clamping device (2) a coupling device (13) for supply lines (15) for influencing the clamping device (2) in the transfer position is provided, wherein the coupling parts opposite the clamping device (2) are provided with an actuating drive to produce the respective coupling connection.

2. Device as claimed in claim 1, **characterised in that** the pallet receivers (7) are provided on a common radially moveable carriage (6).

3. Device as claimed in claim 1 or 2, **characterised in that** the clamping device (2) has locking units (23) which can be released against the force of closing springs (29) in order to lock locking projections (25) on the work piece pallets (3), which locking projections engage into locking receivers (24).

4. Device as claimed in claim 3, **characterised in that** the clamping device (2) comprises lifting cylinders (32) inserted into the locking receivers (24) to lift the work piece pallets (3) from the pallet receiver (7) of the turntable (4).

## Revendications

1. Dispositif de chargement d'une machine de traitement (1), avec une table tournante (4), présentant un guidage de palette radial, et avec un dispositif de serrage (2), associé à la machine de traitement (1), orienté en une position de prise en charge par rapport à la table tournante (4), pour des palettes à pièces d'oeuvre (3) amenées sur le guidage à palettes, **caractérisé en ce que** le guidage à palettes comprend deux supports à palette (7), déplaçables radialement, diamétralement opposés l'un à l'autre par rapport à la table tournante (4), et **en ce que**, entre la table tournante (4) et le dispositif de serrage (2), est prévu un dispositif d'accouplement (13) pour des conduites d'alimentation (15), pour solliciter le dispositif de serrage (2) dans la position de prise en charge, les parties d'accouplement, opposées au dispositif de serrage (2), étant munies d'une commande d'actionnement pour établir la liaison d'accouplement respective.

2. Dispositif selon la revendication 1, **caractérisé en ce que** les supports à palette (7) sont prévus sur un chariot (6) commun, déplaçable radialement.

3. Dispositif selon la revendication 1 ou 2, **caractérisé en ce que** le dispositif de serrage (2) présente des unités de verrouillage (23) désolidarisables à l'encontre de la force de ressorts de fermeture (29), pour verrouiller des appendices de verrouillage (25), s'engageant dans des logements de verrouillage (24), des palettes à pièces d'oeuvre (3).

4. Dispositif selon la revendication 3, **caractérisé en ce que** le dispositif de serrage (2) comprend des vérins (32), insérés dans les logements de verrouillage (24), pour dégager par levage les palettes à pièces d'oeuvre (3) vis à vis du support à palette (7) de la table tournante (4).
